# EUROPEAN PATENT SPECIFICATION

(11) **EP 3 288 302 B1**
(45) Date of publication and mention of the grant of the patent: **06.10.2021**
(21) Application number: 17186224.6
(22) Date of filing: 14.08.2017
(51) Int. Cl.: H04W 12/06, H04W 4/80, H04W 12/50

(54) **SYSTEM AND METHOD FOR IDENTIFYING WIRELESS DEVICES FOR CORRECT PAIRING**
SYSTEM UND VERFAHREN ZUR IDENTIFIZIERUNG DRAHTLOSER VORRICHTUNGEN ZUR KORREKTEN PAARUNG
SYSTÈME ET PROCÉDÉ PERMETTANT D'IDENTIFIER DES DISPOSITIFS SANS FIL POUR APPARIEMENT CORRECT

(30) Priority: 23.08.2016 US 201615244015
(43) Date of publication of application: 28.02.2018
(73) Proprietor: Vocollect, Inc., Pittsburgh, PA 15235 (US)
(72) Inventor: MCGARY, Dale, Morris Plains, NJ New Jersey 07950 (US); ZOSCHG, Ryan A., Morris Plains, NJ New Jersey 07950 (US)
(74) Representative: Haseltine Lake Kempner LLP

(56) References cited:
- EP-A1- 1 635 508
- EP-A1- 3 054 714
- US-A1- 2008 057 890
- US-A1- 2009 061 946

## Description

### FIELD OF THE INVENTION

The present invention relates to pairing of wireless devices and more particularly relates to systems and methods for identifying wireless devices for correct pairing, such as in the pairing of a Bluetooth-enabled wireless headset with a Bluetooth-enabled wireless mobile device.

### BACKGROUND

Wireless devices with Bluetooth radios (i.e., "Bluetooth-enabled devices" or simply "Bluetooth devices") must be correctly "paired" with each other before they can communicate. For example, in a work environment, a Bluetooth-enabled wireless mobile device may be configured to be paired with a single particular Bluetooth-enabled wireless headset for helping a user perform specific tasks.

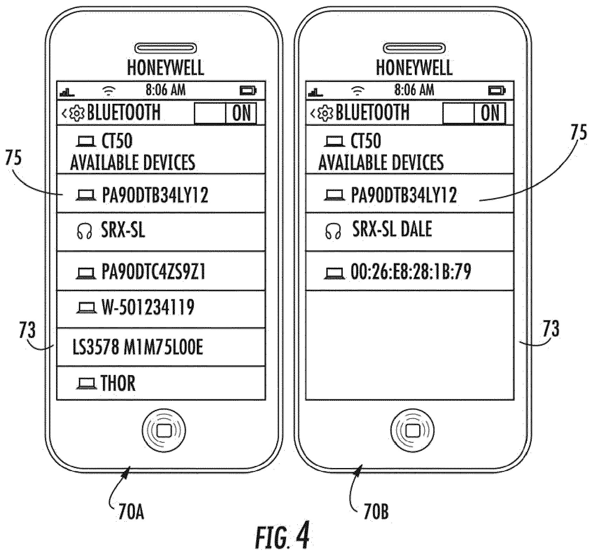

A pairing screen (or simply "screen") on the Bluetooth-enabled wireless mobile device displays a list of nearby Bluetooth wireless devices (i.e., other Bluetooth-enabled wireless devices that are in Bluetooth range of the Bluetooth-enabled mobile device) and that have been placed in discovery mode (and are thus available for pairing) as well as already-paired Bluetooth-enabled wireless devices. The nearby wireless devices may also be referred to herein as "wireless accessories". The list may include one or more wireless headsets conventionally identified on the list with the same fixed name that does not identify any single particular headset. For example, referring briefly to FIG. 4, the Bluetooth-enabled headset listed in the pairing screen of conventional wireless mobile device A is identified with the exemplary fixed generic name "SRX-SL", the model name for the headset. The user may select an available wireless device, such as the Bluetooth-enabled wireless headset, from the list for pairing with his/her respective wireless mobile device. The wireless mobile device then connects wirelessly to the selected wireless accessory, i.e., the wireless mobile device pairs with the selected wireless accessory (the selected wireless accessory also pairs with the wireless mobile device).

In work environments where multiple users are attempting to pair his/her respective wireless mobile device to a single particular wireless headset, for example, at the start of a work shift, an individual user may see more than one wireless headset listed on the pairing screen. As each of the wireless headsets is identified in the list on the pairing screen with the same fixed generic name, the user may select the incorrect wireless headset to pair with his/her respective wireless mobile device. If the incorrect wireless headset is paired with the wireless mobile device, the user may not be able to communicate with the wireless mobile device, necessitating at least one subsequent unpairing to break the connection between the wireless mobile device and the incorrectly paired wireless headset so that the user can try again to pair the wireless mobile device to the correct wireless headset. Thus, the current pairing process may be frustrating, time-consuming, and inefficient. This is particularly true in environments where specific wireless devices are configured to be paired with each other, but multiple wireless accessories such as a wireless headset and more particularly, Bluetooth-enabled wireless headsets with the same fixed generic name appear on the list of available wireless accessories.

Thus, there is a need for systems and methods for identifying wireless devices for correct pairing. There is a particular need for systems and methods for identifying a wireless headset such as a Bluetooth-enabled wireless headset (an exemplary wireless accessory) for correct pairing with another wireless device. Various embodiments permit a user to easily recognize the correct wireless headset on the list displayed on the pairing screen of the wireless device, enabling selection and pairing with his/her respective mobile device and substantially preventing an incorrect pairing, thereby saving time, easing frustration, and improving workplace efficiency.

Reference is made to EP 1 635 508 A1, which discloses pairing between a host wireless communications device and a peripheral communications device, in order to establish an ad hoc wireless network. A device identification, relating uniquely to the peripheral device, is displayed on the host device. In order to accept the pairing, the user confirms that the device identification displayed on the host device matches that printed on the peripheral device, and presses a key on the peripheral device. The, secure pairing is achieved, without requiring a complex user interface on the peripheral device.

### SUMMARY

The present invention is defined by the subject matter of the independent claims. Preferred embodiments are defined by the dependent claims.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

FIG. 1 is a flow diagram of a method for identifying wireless devices for pairing, according to various embodiments;
FIG. 2 is a graphical illustration of a user performing a task such as in a warehouse environment, the user communicating via the exemplary wireless headset to an exemplary wireless mobile device that is paired to the wireless headset;
FIG. 3 is a schematic block diagram of hardware and software components of the exemplary wireless mobile devices of FIGS. 2 and 4 and the exemplary wireless headset of FIG. 2 in a system for identifying wireless devices for correct pairing, according to various embodiments; and
FIG. 4 is a side by side comparison of a display of a conventional exemplary wireless mobile device 70A and an exemplary wireless mobile device 70B according to the invention, the display of each of wireless mobile device 70A and wireless mobile device 70B displaying a pairing screen with a list of wireless accessories including a wireless headset available for pairing to the wireless mobile device, the wireless headset identified in the list on the pairing screen of the conventional wireless mobile device 70A with a fixed generic name "SRX-SL" and on the pairing screen of wireless mobile device 70B with the unique identifier "SRX-SL Dale" according to various embodiments.

### DETAILED DESCRIPTION

Various embodiments are directed to systems and methods for identifying wireless devices for correct pairing. Various embodiments enable identification of a single particular wireless headset (an exemplary wireless accessory) for correct pairing with another wireless device, such as a wireless mobile device. Various embodiments permit a user to easily recognize which wireless headset listed on a pairing screen of the wireless device is configured to correctly pair with his/her respective wireless mobile device. Various embodiments improve workplace efficiency, and save time and frustration in having to disconnect incorrect pairings. Various embodiments distinguish between shared wireless accessories. As used herein, the term "wireless accessory" is used to distinguish a wireless device that another wireless device is connected to (e.g., a wireless headset) from a wireless device that connects to the wireless accessory (e.g., a wireless mobile device). In accordance with various embodiments, a Bluetooth-enabled wireless headset is communicatively coupled to a Bluetooth-enabled mobile device via a Bluetooth wireless communications protocol.

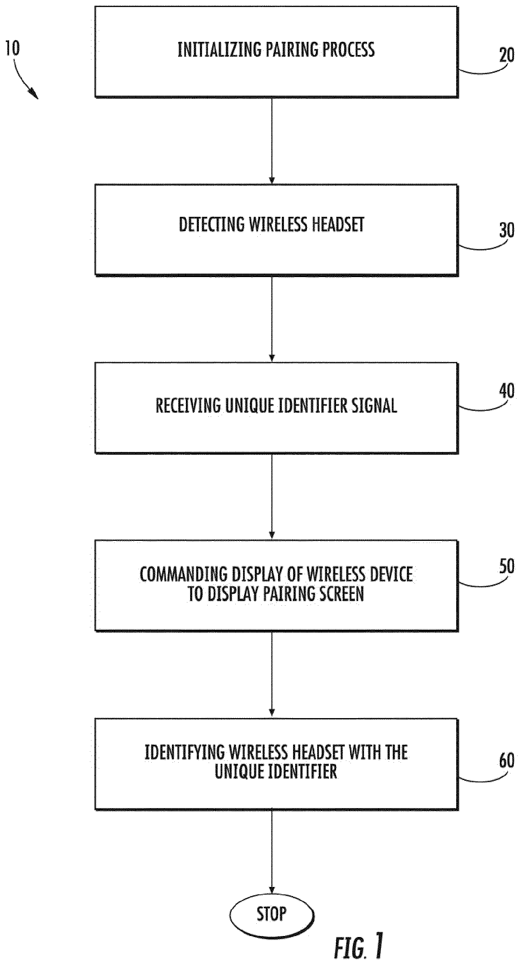

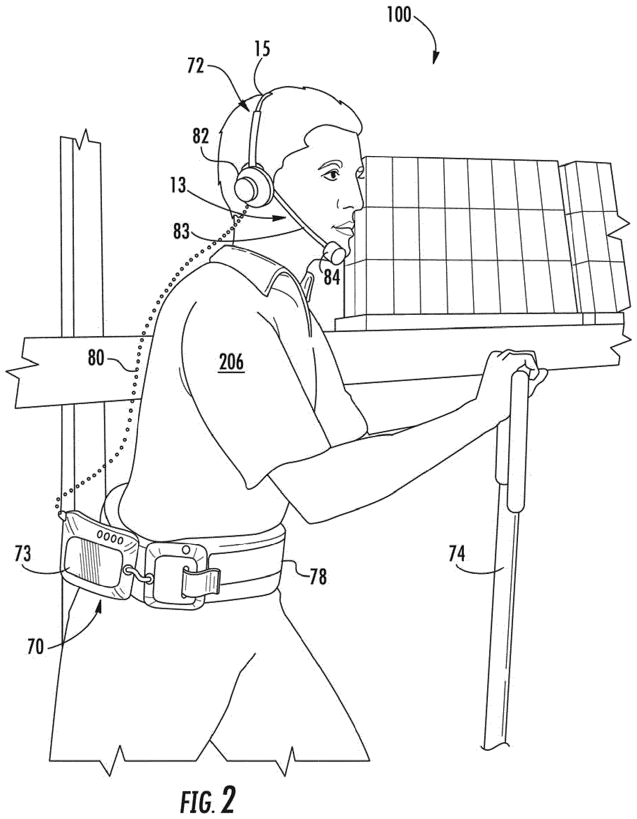

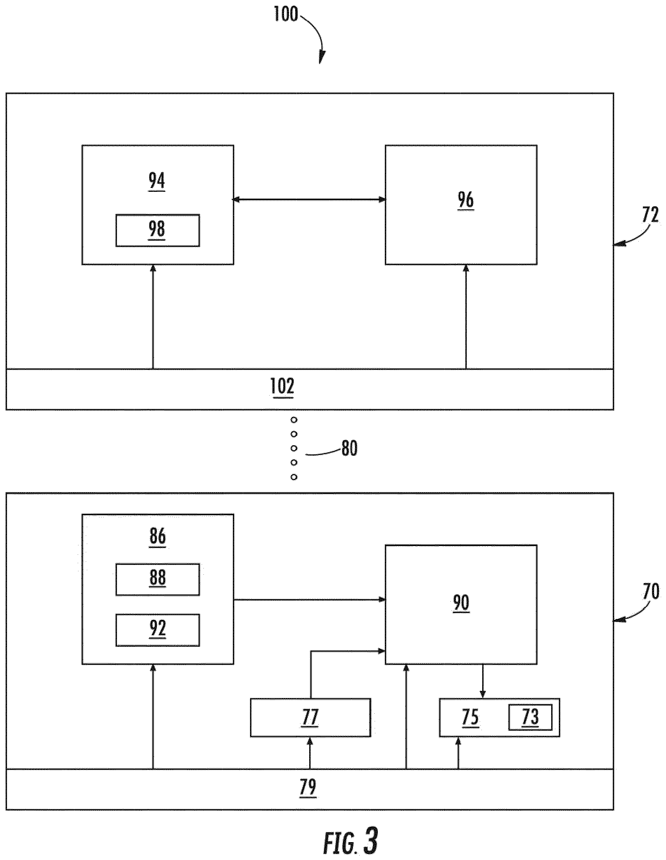

Referring now to FIG. 1, according to various embodiments, a flow diagram of a method 10 for identifying a wireless headset for correct pairing to another wireless device is illustrated. FIG. 2 graphically illustrates an exemplary wireless headset 72 worn by a user 206 and paired to a wireless device comprising a wireless mobile device 70, and used in system 100 (FIG. 3) for identifying the wireless headset 72 for correct pairing to another wireless device, such as the wireless mobile device 70 of FIG. 2, according to various embodiments. The system 100 for identifying the wireless headset for correct pairing to another wireless device comprises the wireless headset 72 and the wireless device (the wireless mobile device 70 in the depicted embodiment) to which the wireless headset 72 is configured to be paired via the Bluetooth wireless communications protocol. For example, in accordance with various embodiments as noted previously, the wireless headset 72 (a wireless accessory) may comprise a Bluetooth-enabled wireless headset and the other wireless device may be a Bluetooth-enabled wireless device such as a Bluetooth mobile device, i.e., the Bluetooth wireless headset may be paired (i.e., communicatively coupled) to the Bluetooth wireless mobile device via the Bluetooth wireless communication protocol as illustrated in FIG. 3.

Still referring to FIG. 2, according to various embodiments, the wireless mobile device 70 comprises a portable and/or wearable mobile computing device worn by the user 206, for example, such as on a belt 78 as illustrated in the depicted embodiment. The wireless mobile device 70 may be carried or otherwise transported, on a vehicle 74 used in the workplace.

FIG. 3 is a schematic block diagram of at least a portion of the hardware and software components of the wireless mobile device 70 and the wireless headset 72 of FIG. 2, according to various embodiments. The wireless mobile device 70 comprises a memory 86 and a program code 88 resident in the memory 86, a display 73 (FIGS. 2 and 4) configured for displaying a pairing screen 75 as hereinafter described, and at least one processing unit communicatively coupled to the memory 86 and the display 73. The wireless mobile device further comprises a wireless radio 77, such as a Bluetooth radio and a power supply 79, such as a battery, rechargeable battery, rectifier, and/or another power source.

The at least one processing unit 90 of the wireless mobile device 70 is typically implemented in hardware using circuit logic disposed in one or more physical integrated circuit devices, or chips. Each processing unit 90 may be one or more microprocessors, micro-controllers, field programmable gate arrays, or ASICs, while memory 86 may include RAM, DRAM, SRAM, flash memory, and/or another digital storage medium, and that is also typically implemented using circuit logic disposed in one or more physical integrated circuit devices, or chips. As such, memory is considered to include memory storage physically located elsewhere in the wireless mobile device 70, e.g., any cache memory in the at least one processing unit 90, as well as any storage capacity used as a virtual memory, e.g., as stored on a mass storage device, a computer, and/or or another device coupled to the wireless mobile device, including coupled to the wireless mobile device 70 through at least one network I/F by way of a communications network. The wireless mobile device, in turn, may be coupled to the communications network through the network I/F with at least one wired and/or wireless connection.

The wireless mobile device 70 may be under the control and/or otherwise rely upon various software applications, components, programs, files, objects, modules, etc. (herein the "program code" 88 that is resident in memory) according to various embodiments of the present invention. This program code may include an operating system (e.g., such as a Windows Embedded Compact operating system as distributed by Microsoft Corporation of Redmond, WA, an ANDROID operating system, an IOS operating system, or the like.) as well as one or more software applications (e.g., configured to operate in an operating system or as "stand-alone" applications). As such, the memory may also be configured with one or more task applications 92. The one or more task applications process messages or task instructions for the user (e.g., by displaying and/or converting the task messages or task instructions into speech output). The task application(s) implement a dialog flow, such as for a pick-and-place, voice-assisted, or voice-directed operation. The task application(s) may communicate with a server to receive task messages or task instructions. In various embodiments, suitable exemplary wireless mobile devices for implementing the present invention are a Honeywell CT50 wearable wireless mobile and a Honeywell D75E wireless mobile device available from Honeywell International, Inc.

Still referring to FIGS. 2 and 3, according to various embodiments, the wireless headset 72 is depicted. A "headset" is a device commonly understood to allow two-way communications. The wireless headset 72 comprises a user input/output device. The wireless headset 72 provides hands-free voice communication between the user 206 and the wireless mobile device 70. The wireless headset 72 may be used, for example, in voice-enabled workplace operations (such as a pick to voice picking operation, etc.). In various embodiments, a user 206 may interface with the wireless mobile device 70 (and the wireless mobile device 70 interfaces with the user 206) through the wireless headset 72, which is coupled to the wireless mobile device 70 through a wireless control signal (indicated by dots 80 in FIGS. 2 and 3) as hereinafter described. The wireless mobile device 70 is configured to communicate with the wireless headset 72 through a headset interface, which is in turn configured to couple to the wireless headset wirelessly. In various embodiments, as noted previously, the wireless mobile device 70 may be coupled to the wireless headset 72 through the BlueTooth® wireless communication protocol that is known in the art.

Still referring to FIG. 2, according to various embodiments, the wireless headset 72 comprises a generally U-shaped, resilient headband 15 that can be fitted over the top of the user's head and a receiver assembly 13 rotationally coupled to the headband 15. In various embodiments, the headband 15 may be separable from the receiver assembly. In this regard, each user may have his/her own personal headband.

The receiver assembly 13 comprises an electronics module (FIG. 3) as hereinafter described. The receiver assembly 13 further comprises a microphone boom 83 having a first end and a second end. One or more microphones 84 are located adjacent the first end and can be positioned adjacent the user's mouth as depicted in FIG. 2. One or more speakers 82 are located adjacent the second end of the microphone boom 83 and can be positioned over a user's ear. The one or more speakers are configured to play audio (e.g., such as speech output associated with a voice dialog to instruct the user to perform an action/task), while the one or more microphones are configured to capture speech input from the user (e.g., such as for conversion to machine readable input). As such, the user 206 interfaces with the wireless mobile device 70 hands-free through the wireless headset 72.

Still referring to FIG. 3, according to various embodiments, the receiver assembly 13 (the electronics module) of the wireless headset 72 comprises a headset memory 94 and a processor 96 communicatively coupled to the headset memory 94. In accordance with various embodiments, the headset memory 94 may be additionally or alternatively be in the headband 15 of the wireless headset 72. The headset memory 94 stores the unique identifier (as exemplified by SRX-SL Dale in FIG. 4) that identifies the single particular wireless headset, according to various embodiments. According to various embodiments, the headset memory 94 is configured to store the unique identifier associated with each of the wireless headsets in a unique identifier file 98 within the headset memory. Headset memory 94 may include non-volatile memory. Headset memory 94 may additionally or alternatively comprise an integrated circuit chip that stores a static, unique identifier.

The processor 96 of the wireless headset 72 may be within the receiver assembly and is typically implemented in hardware using circuit logic disposed on one or more physical integrated circuit devices or chips and may be one or more microprocessors, micro-controllers, FPGAs, or ASICs. The wireless headset 72 also comprises a headset power supply. The headset power supply 102 may be a battery, rechargeable battery, rectifier, and/or another power source.

As known in the art, the processor 96 of the wireless headset 72 is configured to transmit and receive the wireless control signal 80 for establishing and at least temporarily maintaining a Bluetooth wireless connection (with the wireless mobile device 70 when the wireless headset 72 is placed in discovery mode. The wireless headset 72 is placed into discovery mode by the user 206 in order to transmit and receive the wireless control signal 80. The exact way to place the wireless headset 72 in discovery mode depends on the wireless headset. For example, the user 206 may need to hold a button down on the headset for several seconds until a light starts flashing. The light may flash to indicate that the wireless headset 72 is in discovery mode. It is to be understood that the wireless headset can be made discoverable in other manners.

Referring again to FIG. 1, according to various embodiments, the method 10 for identifying a wireless headset for correct pairing to another wireless device begins by initializing a pairing process to pair the wireless device to the wireless headset (step 20). The pairing process is initialized by searching for nearby wireless accessories that have been placed in discovery mode. As used herein, the term "nearby" means within Bluetooth wireless range.

While method 10 for identifying a wireless headset for correct pairing to another wireless device is described as performed by the processing unit of the Bluetooth-enabled mobile device, it is to be understood that alternative methods may be performed by the processor of the wireless headset according to various embodiments. For example, such method comprises reading a unique identifier from the headset memory and transmitting a signal representing the unique identifier upon pairing of the wireless headset to another wireless device such that a pairing screen on the wireless device identifies the wireless headset with the unique identifier.

Still referring to FIG. 1, according to various embodiments, the method 10 for identifying a wireless headset for correct pairing to another wireless device continues by detecting the wireless headset (step 30), such as wireless headset 72 depicted in FIG. 3. The processing unit 90 of the wireless mobile device 70 detects the wireless headset 72 by receiving the wireless control signal 80 transmitted from the processor 96 of the wireless headset 72. In accordance with various embodiments, the wireless control signal 80 comprises a Bluetooth inquiry response. In accordance with various embodiments, the Bluetooth friendly name (the unique identifier) is returned as part of the inquiry response during pairing. The processing unit 90 of the wireless mobile device 70 may also detect a wireless control signal comprising the Bluetooth inquiry response from one or more other wireless accessories that are in discovery mode and within wireless range. For example, the processing unit 90 of the wireless mobile device may detect the wireless control signal comprising the Bluetooth inquiry response from each wireless headset that has been placed in discovery mode and is within wireless range. The processing unit 90 of the wireless mobile device 70 may also or alternatively detect the wireless control signal 80 comprising the Bluetooth inquiry response from other wireless accessories available for pairing. For example, referring briefly to FIG. 4, the processing unit 90 of wireless mobile device 70B has detected a wireless control signal comprising the Bluetooth inquiry response from four computers, each identified with a computer icon and a serial number that does not change for the particular computer.

Still referring to FIG. 1, according to various embodiments, the method 10 for identifying a wireless headset for correct pairing to another wireless device continues by receiving the unique identifier signal that identifies the wireless headset (step 40). The processing unit 90 of the wireless mobile device 70 receives the unique identifier signal. The unique identifier signal represents the unique identifier (e.g., SRX-SL Dale on wireless mobile device 70B of FIG. 4). As noted previously, the wireless headset 72 may be one wireless headset of a plurality of wireless headsets in discovery mode and in wireless range of the wireless mobile device 70. The processing unit 90 of the wireless mobile device 70 may receive a unique identifier signal from each wireless headset 72. Each of the wireless headsets 72 is identified on the pairing screen 75 of the wireless mobile device 70 with a different unique identifier, according to various embodiments as hereinafter described.

In accordance with the invention the processor in receiver assembly 13 (the electronics module dynamically changes the inquiry response (the unique identifier) depending on whose headset is communicatively coupled to the wireless mobile device. Therefore, it is possible to customize the headset for the user if the headset memory is in the receiver assembly of the wireless headset. If the headset memory is in the headband and as each user may have his/her own headband, it is possible to customize the headband for the user.

Still referring to FIG. 1, according to various embodiments, the method 10 for identifying a wireless headset for correct pairing to another wireless device continues by commanding the display 73 of the wireless mobile device 70 to display the pairing screen 75(step 50). The pairing screen 75 displays a list of wireless accessories available for pairing to the wireless mobile device 70, i.e., the pairing screen 75 displays a list of the nearby wireless devices that have been placed in discovery mode as well as any wireless accessories already paired to the wireless device. For example, the pairing screen 75 of mobile device 70B of FIG. 4 lists the wireless accessories placed in discovery mode and within wireless range under the heading "Available Devices" (i.e., available to be paired with a wireless mobile device 70 such as depicted in FIGS. 2 and 4) .Still referring to FIGS. 1 and 4, according to various embodiments, the method 10 for identifying a wireless headset for correct pairing to another wireless device continues by identifying the wireless headset with the unique identifier on the pairing screen (step 60) . The processing unit 90 is configured to identify the wireless headset 72 with the unique identifier on the pairing screen. For example, the pairing screen 75 of exemplary wireless mobile device 70B in FIG. 4 displays an icon representing the wireless headset with the unique known identifier "SRX-SL-Dale" that is unique to a headset user named "Dale". While the unique identifier "SRX-SL-Dale" is illustrated, it is to be understood that other unique identifiers may be used. The unique identifier may be unique to the particular user. In addition, while the unique identifier "SRX-SL-Dale" includes the fixed generic name "SRX-SL" and the personal name "Dale", it is to be understood that the unique identifier may be any characters, letters, numbers, etc. that identify a user of a particular wireless headset. It is not necessary that the fixed generic name be included in the unique identifier. As used herein, the term "device identifier" includes both fixed generic names and unique identifiers and is used herein to refer to wireless devices displaying a generic name and devices displaying a unique identifier, in accordance with various embodiments. Therefore, each wireless headset broadcasts a device identifier, with the device identifier for at least one of the listed wireless headsets is unique to that wireless headset.

While the pairing screen of Bluetooth wireless mobile device 70B in FIG. 4 includes only one listed wireless headset, it is to be understood that the list on the pairing screen of a wireless mobile device may include one or more wireless headsets as well as other wireless accessories if detected in step 30. Each wireless headset of the plurality of wireless headsets is identified on the pairing screen 75 with a different unique identifier, according to various embodiments. Each wireless headset of the plurality of wireless headsets may be labeled or otherwise with the unique identifier and/or the user can be made aware of the unique identifier for his/her own wireless headset to easily and quickly identify the correct wireless headset from the list on the pairing screen of his/her wireless device, such as on the wireless mobile device 70B of FIG. 4.

Thereafter, as known in the art, to complete the pairing process, the user selects the wireless accessory to be paired with his/her wireless device from the pairing screen on the wireless device. The wireless device then connects wirelessly to the selected wireless accessory. In accordance with various embodiments, as the user knows the unique identifier (the "unique identifier") for the wireless headset that he/she is wearing or holding (for example, by reference to a label or otherwise on the wireless headset, by memory, etc.), the user may select the wireless headset identified with the unique identifier for pairing with his/her wireless device, such as the wireless mobile device 70B depicted in FIG. 4. The wireless mobile device then connects wirelessly to the selected wireless headset, resulting in a correct pairing. Correct pairing of the particular wireless headset with the user's wireless device enables the user wearing the wireless headset to communicate with the wireless device to which it is paired.

While a wireless headset 72 has been described as configured for pairing to a wireless mobile device 70 ("another wireless device"), it is to be understood that a wireless device other than a wireless headset may be configured for pairing to another wireless device according to various embodiments. While a wireless headset configured for pairing with a wireless mobile device has been described, it is to be understood that the wireless headset and other wireless accessories may be configured to pair with other than a wireless mobile device according to various embodiments. While a Bluetooth-enabled wireless mobile device has been described as configured for pairing to a Bluetooth-enabled wireless headset (and vice versa), it is to be understood that other Bluetooth-enabled wireless devices configured to be paired may benefit from various embodiments as described herein.

Various embodiments enable each wireless headset to transmit a unique identifier signal that is listed on the pairing screen of another wireless device to which the wireless headset is configured to be paired, enabling each user to select the correct headset for correct pairing with his/her respective wireless device. Various embodiments improve workplace efficiency, and save time and frustration in having to disconnect incorrect pairings. Various embodiments distinguish between shared wireless accessories, such as shared wireless headsets.

In the specification and/or figures, typical embodiments of the invention have been disclosed. The present invention is not limited to such exemplary embodiments.

## Claims

1. A wireless headset (72) comprising a receiver assembly (13), the receiver assembly comprising:
a headset memory (94) operable to store a unique identifier to uniquely identify the wireless headset; and
a processor (96) communicatively coupled to the headset memory, wherein the processor is configured to:
read the unique identifier from the headset memory; and
transmit a signal (80) representing the unique identifier of the wireless headset to a wireless device (70) such that a screen (75) on the wireless device identifies the wireless headset with the unique identifier, wherein:
at least a portion of the unique identifier is associated with the wireless headset and
the wireless headset being charecterised in that the receiver assembly is operable to dynamically change the unique identifier based on a user (206) of the wireless headset.

2. The wireless headset according to claim 1, wherein the headset memory comprises non-volatile memory.

3. The wireless headset according to claim 2, wherein the wireless headset comprises a headband (15) and a receiver assembly (13).

4. The wireless headset according to claim 3, wherein the headset memory is in the headband.

5. The wireless headset according to claim 3, wherein the headset memory is in the receiver assembly.

6. The wireless headset according to claim 1, wherein the at least a portion of the unique identifier is located on the wireless headset.

7. The wireless headset according to claim 1, wherein the wireless headset is one of a plurality of wireless headsets listed on the screen, and wherein each wireless headset of the plurality of wireless headsets is identified on the screen with a different unique identifier.

8. A method (10) for identifying a wireless headset (72) for pairing to a wireless device (70), the method comprising:
detecting (30) the wireless headset upon initialization of a pairing process, the headset comprising a receiver assembly that is operable to dynamically change a unique identifier based on a user of the wireless headset;
receiving (40) a unique identifier signal from the wireless headset, the unique identifier signal representing the unique identifier that is based on a user of the wireless headset;
displaying (50) a screen; and
identifying (60) the wireless headset on the screen with the unique identifier, wherein at least a portion of the unique identifier is associated with the wireless headset.

9. The method according to claim 8, wherein detecting the wireless headset comprises detecting a plurality of wireless headsets available for pairing, and wherein the wireless headset comprises one wireless headset of the plurality of wireless headsets.

10. The method according to claim 9, further comprising receiving the unique identifier signal from one or more wireless headsets of the plurality of wireless headsets.

11. The method according to claim 9, wherein each wireless headset of the plurality of wireless headsets broadcasts a device identifier, and wherein the device identifier for at least one of the one or more wireless headsets is unique to that wireless headset.

12. The method according to claim 10, wherein identifying the wireless headset with the unique identifier on the screen comprises identifying each wireless headset with a different unique identifier on the screen.

## Patentansprüche

1. Drahtloser Kopfhörer (72), umfassend eine Empfängereinheit (13), die Empfängereinheit umfassend:
einen Kopfhörerspeicher (94), der betreibbar ist, um eine eindeutige Kennung zu speichern, um den drahtlosen Kopfhörer eindeutig zu identifizieren; und
einen Prozessor (96), der kommunikativ mit dem Kopfhörerspeicher gekoppelt ist, wobei der Prozessor konfiguriert ist zum:
Lesen der eindeutigen Kennung aus dem Kopfhörerspeicher; und
Übertragen eines Signals (80), das die eindeutige Kennung des drahtlosen Kopfhörers darstellt, an eine drahtlose Vorrichtung (70), sodass ein Bildschirm (75) auf der drahtlosen Vorrichtung den drahtlosen Kopfhörer mit der eindeutigen Kennung identifiziert, wobei:
mindestens ein Teil der eindeutigen Kennung dem drahtlosen Kopfhörer zugeordnet ist und
der drahtlose Kopfhörer **dadurch gekennzeichnet ist, dass** die Empfängereinheit betreibbar ist, um die eindeutige Kennung basierend auf einem Benutzer (206) des drahtlosen Kopfhörers dynamisch zu ändern.

2. Drahtloser Kopfhörer nach Anspruch 1, wobei der Kopfhörerspeicher einen nichtflüchtigen Speicher umfasst.

3. Drahtloser Kopfhörer nach Anspruch 2, wobei der drahtlose Kopfhörer ein Kopfband (15) und eine Empfängereinheit (13) umfasst.

4. Drahtloser Kopfhörer nach Anspruch 3, wobei sich der Kopfhörerspeicher im Kopfband befindet.

5. Drahtloser Kopfhörer nach Anspruch 3, wobei sich der Kopfhörerspeicher in der Empfängereinheit befindet.

6. Drahtloser Kopfhörer nach Anspruch 1, wobei sich der mindestens eine Teil der eindeutigen Kennung auf dem drahtlosen Kopfhörer befindet.

7. Drahtloser Kopfhörer nach Anspruch 1, wobei der drahtlose Kopfhörer einer von einer Mehrzahl von auf dem Bildschirm aufgelisteten drahtlosen Kopfhörern ist, und wobei jeder drahtlose Kopfhörer der Mehrzahl von drahtlosen Kopfhörern auf dem Bildschirm mit einer anderen eindeutigen Kennung identifiziert wird.

8. Verfahren (10) zur Identifizierung eines drahtlosen Kopfhörers (72) zur Paarung mit einer drahtlosen Vorrichtung (70), das Verfahren umfassend:
Erkennen (30) des drahtlosen Kopfhörers bei Initialisierung eines Paarungsverfahrens, der Kopfhörer umfassend eine Empfängereinheit, die betreibbar ist, um die eindeutige Kennung basierend auf einem Benutzer des drahtlosen Kopfhörers dynamisch zu ändern;
Empfangen (40) eines eindeutigen Kennungssignals von dem drahtlosen Kopfhörer, wobei das eindeutige Kennungssignal die eindeutige Kennung darstellt, die auf einem Benutzer des drahtlosen Kopfhörers basiert;
Anzeigen (50) eines Bildschirms; und
Identifizierung (60) des drahtlosen Kopfhörers auf dem Bildschirm mit der eindeutigen Kennung, wobei mindestens ein Teil der eindeutigen Kennung dem drahtlosen Kopfhörer zugeordnet ist.

9. Verfahren nach Anspruch 8, wobei das Erkennen des drahtlosen Kopfhörers das Erkennen einer Mehrzahl von drahtlosen Kopfhörern umfasst, die zur Paarung verfügbar sind, und wobei der drahtlose Kopfhörer einen drahtlosen Kopfhörer der Mehrzahl von drahtlosen Kopfhörern umfasst.

10. Verfahren nach Anspruch 9, ferner umfassend das Empfangen des eindeutigen Kennungssignals von einem oder mehreren drahtlosen Kopfhörern der Mehrzahl von drahtlosen Kopfhörern.

11. Verfahren nach Anspruch 9, wobei jeder drahtlose Kopfhörer der Mehrzahl von drahtlosen Kopfhörern eine Vorrichtungskennung aussendet, und wobei die Vorrichtungskennung für mindestens einen von dem einen oder den mehreren der drahtlosen Kopfhörer für diesen drahtlosen Kopfhörer eindeutig ist.

12. Verfahren nach Anspruch 10, wobei die Identifizierung des drahtlosen Kopfhörers mit der eindeutigen Kennung auf dem Bildschirm die Identifizierung jedes drahtlosen Kopfhörers mit einer anderen eindeutigen Kennung auf dem Bildschirm umfasst.

## Revendications

1. Casque sans fil (72) comprenant un ensemble récepteur (13), l'ensemble récepteur comprenant :
une mémoire de casque (94), utilisable pour stocker un identifiant unique pour identifier de manière unique le casque sans fil ; et
un processeur (96), couplé fonctionnellement à la mémoire de casque, le processeur étant configuré :
pour lire l'identifiant unique à partir de la mémoire de casque ; et
pour transmettre un signal (80) représentant l'identifiant unique du casque sans fil à un dispositif sans fil (70) de telle sorte qu'un écran (75) du dispositif sans fil identifie le casque sans fil par l'identifiant unique :
au moins une partie de l'identifiant unique étant associée au casque sans fil et
le casque sans fil **se caractérisant en ce que** l'ensemble récepteur peut fonctionner pour modifier dynamiquement l'identifiant unique en fonction d'un utilisateur (206) du casque sans fil.

2. Casque sans fil selon la revendication 1, dans lequel la mémoire de casque comprend une mémoire non volatile.

3. Casque sans fil selon la revendication 2, le casque sans fil comprenant un serre-tête (15) et un ensemble récepteur (13).

4. Casque sans fil selon la revendication 3, dans lequel la mémoire de casque est dans le serre-tête.

5. Casque sans fil selon la revendication 3, dans lequel la mémoire de casque se trouve dans l'ensemble récepteur.

6. Casque sans fil selon la revendication 1, dans lequel l'au moins une partie de l'identifiant unique se trouve dans le casque sans fil.

7. Casque sans fil selon la revendication 1, le casque sans fil étant un casque parmi une pluralité de casques sans fil répertoriés sur l'écran et chaque casque sans fil de la pluralité de casques sans fil s'identifiant sur l'écran par un identifiant unique différent.

8. Procédé (10) permettant d'identifier un casque sans fil (72) pour l'appariement à un dispositif sans fil (70), le procédé comprenant :
la détection (30) du casque sans fil lors de l'initialisation d'un processus d'appariement, le casque comprenant un ensemble récepteur utilisable pour changer dynamiquement un identifiant unique en fonction d'un utilisateur du casque sans fil ;
la réception (40) d'un signal d'identification unique provenant du casque sans fil, le signal d'identification unique représentant l'identifiant unique basé sur un utilisateur du casque sans fil ;
l'affichage (50) sur un écran ; et
l'identification (60) du casque sans fil sur l'écran par l'identifiant unique, au moins une partie de l'identifiant unique étant associée au casque sans fil.

9. Procédé selon la revendication 8, dans lequel la détection du casque sans fil comprend la détection d'une pluralité de casques sans fil disponibles pour l'appariement et dans lequel le casque sans fil comprend un casque sans fil de la pluralité de casques sans fil.

10. Procédé selon la revendication 9, comprenant en outre la réception du signal d'identification unique en provenance d'un ou de plusieurs casques sans fil de la pluralité de casques sans fil.

11. Procédé selon la revendication 9, dans lequel chaque casque sans fil de la pluralité de casques sans fil diffuse un identifiant de dispositif et dans lequel l'identifiant de dispositif pour au moins un du ou des casques sans fil est unique pour ce casque sans fil.

12. Procédé selon la revendication 10, dans lequel l'identification du casque sans fil par l'identifiant unique sur l'écran comprend l'identification de chaque casque sans fil par un identifiant unique différent sur l'écran.
